# DEMANDE DE BREVET EUROPEEN

(11) **EP 1 619 779 A1**
(43) Date de publication de la demande: **25.01.2006**
(21) Numéro de dépôt: 05291568.3
(22) Date de dépôt: 21.07.2005
(51) Int. Cl.: H02K 21/16

(54) **Moteur électrique triphase**

(30) Priorité: 22.07.2004 FR 0408125
(71) Demandeur: Moving Magnet Technologies, 25000 Besançon (FR)
(72) Inventeur: Prudham, Daniel, 25220 Thise (FR)
(74) Mandataire: Breese Derambure Majerowicz

(57) **Abrégé**

La présente invention concerne un moteur triphasé formé par une partie statorique (1) excitée par des bobines électriques (42 à 50) et par un rotor (2) aimanté présentant N paires de pôles aimantés radialement en sens alternés, la partie statorique (1) comportant 9 dents identiques (11 à 19) s'étendant radialement depuis une couronne annulaire (10) et présentant chacune une section constante de forme trapézoïdale, et de préférence rectangulaire. Chaque phase comporte une série de trois bobines qui sont placées sur trois dents consécutives, la bobine centrale de chaque série étant alimentée en sens opposé par rapport aux deux autres bobines de la même série. En plus, le rapport diamètre de l'aimant sur diamètre extérieur du moteur est sensiblement égal à 0,55.

## Description

La présente invention concerne un moteur électrique triphasé, notamment pour des applications de commande de vannes dans l'industrie automobile.

De tels moteurs sont par exemple décrits dans le brevet américain US5880551 de la demanderesse. Ce brevet antérieur concerne un moteur polyphasé formé par une partie statorique excitée par des bobines électriques et par un rotor aimanté. Le rotor présente N paires de pôles aimantés radialement en sens alternés. la partie statorique présente au moins deux circuits en forme de "W" comportant chacun une bobine électrique entourant la jambe centrale. Les circuits en "W" sont disposés de façon à ce que lorsque l'une des jambes centrales se trouve en face d'une transition magnétique, l'autre jambe centrale se trouve en face d'un pôle magnétique. Les épanouissements polaires des jambes centrales de deux circuits en "W" sont écartées angulairement d'un angle électrique sensiblement égal à 120°.

Dans le domaine industriel et automobile, le choix d'un moteur polyphasé se réduit souvent au moteur triphasé. Cette préférence est motivée par une électronique moins complexe et moins coûteuse à mettre en oeuvre. Les moteurs triphasés se sont donc démarqués des autres moteurs polyphasés. De nombreuses applications requièrent de la part de ces moteurs triphasés qu'ils fournissent de forts couples à des températures élevées. A cela s'ajoutent des contraintes d'encombrement et de poids réduits. Aussi, pour répondre à ce type d'applications, il est important que la structure du moteur lui permette d'exploiter au maximum ses propriétés magnétiques et thermiques.

A cet effet, l'invention concerne un moteur triphasé formé par une partie statorique excitée par des bobines électriques et par un rotor aimanté présentant N paires de pôles aimantés radialement en sens alternés, la partie statorique présentant 9 dents identiques s'étendant radialement depuis une couronne annulaire tout en ayant une section sensiblement constante, de forme trapézoïdale, et de préférence rectangulaire. Deux dents consécutives sont écartées angulairement de 40°. Chaque phase comporte une série de trois bobines, placées sur trois dents consécutives, la bobine centrale d'une série étant alimentée en sens opposé par rapport aux deux autres bobines de la même série.

Chaque dent présente :
- une section constante dans le plan longitudinal, parallèle à l'axe de rotation et perpendiculaire à l'axe radial de la dent. Cette section est rectangulaire, et notamment carrée.
- une section constante dans le plan transversal, contenant l'axe radial de la dent et perpendiculaire à l'axe de rotation du moteur. La section, dans le plan transversal, est rectangulaire, avec un coté concave du coté du rotor, le centre de la courbure correspondant à l'axe de rotation du moteur. Eventuellement, la forme pourrait être trapézoïdale, avec deux cotés de part et d'autre de l'axe radial de la dent convergeant en direction de l'axe de rotation du moteur. Il ne s'agit toutefois pas du mode de réalisation préféré.

Le moteur selon l'invention comporte principalement :
- Un rotor constitué généralement d'une pièce ferromagnétique sur laquelle est monté un ensemble d'aimants permanents constituant **N** paires de pôles magnétiques. Une paire de pôles est la juxtaposition de deux aimants ayant une polarisation opposée (Nord, Sud). **N** étant égal à 4 ou à 5 paires de pôles.
- Un stator ayant 9 dents identiques réparties angulairement de manière uniforme. A savoir, le décalage angulaire entre chaque dent est de 40°.Le stator supporte les bobines de. cuivre permettant de créer un champ magnétique lorsque ces dernières sont traversées par un courant électrique.
- Un ensemble de bobines constituent les trois phases. Chaque phase regroupant 3 bobines consécutives. Une telle réalisation permet d'obtenir un angle de 120° entre phase.

Le moteur selon l'invention conduit à un mode de réalisation du moteur peu coûteux, le stator pouvant être constitué d'un empilement de tôles fines.

De part de la forme du stator, qui présente 9 dents identiques de section rectangulaire constante, les bobines peuvent être réalisées hors du stator et ensuite insérées dans celui-ci, chaque bobine entourant une dent statorique. La réalisation des bobines en dehors du stator permet une réalisation beaucoup plus facile de celles-ci notamment dans le cas d'un bobinage avec des fils de gros diamètre (supérieur à 0.7mm). Ce procédé permet d'autre part d'avoir une bobine affleurant la dent, c'est-à-dire située au plus près du rotor (aimant) d'où une perte de flux magnétique réduite.

Chaque phase est constituée d'un circuit à trois dents consécutives reliées par une section annulaire. Cette forme offre l'avantage d'avoir un trajet de flux réduit d'où des pertes plus faibles dans le moteur.

L'augmentation du nombre de bobines permet une augmentation du nombre de pôles magnétiques actifs ce qui conduit à une augmentation des performances moteur pour un même aimant.

Du point de vue thermique, la structure 9 bobines présente l'avantage de dissiper la même puissance Joule (chaleur) sur une plus grande surface de contact (trois bobines contre une seule pour la solution de l'art antérieur), d'où un échauffement plus faible pour la version 9 bobines.

Préférentiellement, le moteur comporte pour chaque phase, une série de trois bobines placées sur trois dents consécutives, l'une des bobines d'une série étant alimentée en sens opposé par rapport aux deux autres bobines de la même série.

Selon une première variante, le rotor présente 4 paires de pôles magnétiques.

Selon une deuxième variante, il présente 5 paires de pôles magnétiques.

Selon un mode de réalisation particulier, le rotor est formé par une bague aimantée en festons.

De préférence, le stator comporte trois séries de trois bobines alimentées par des signaux déphasés de 120°.

Selon un mode de réalisation préféré, le stator est constitué par un empilement de tôles fines.

Avantageusement, l'extrémité frontale de l'épanouissement polaire est située dans le plan de la face frontale intérieure de la bobine.

L'invention sera mieux comprise à la lecture de la description qui suit, faisant référence aux dessins annexés où :

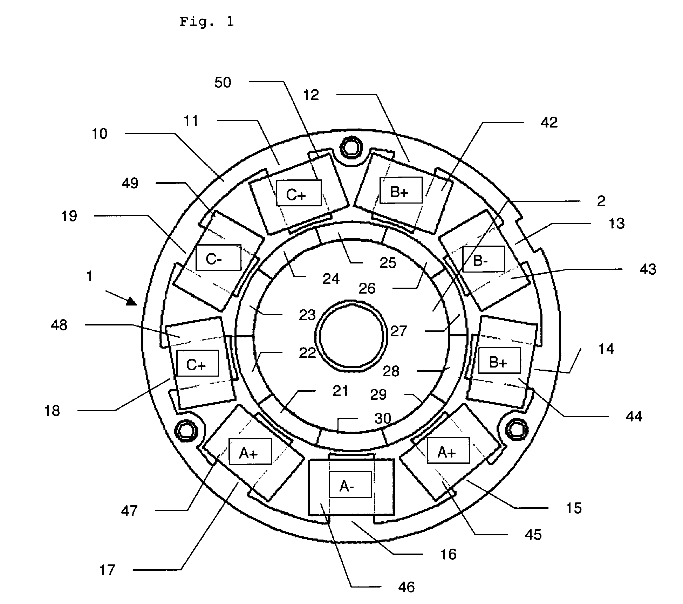

La figure 1 représente une vue en coupe transversale d'un moteur selon l'invention. Le moteur comporte un stator (1) et un rotor (2).
La figure 2 représente une vue en coupe transversale partielle d'un moteur selon l'invention et montrant la largeur (60) d'une dent du stator ainsi que le pas polaire (70) du rotor.
La figure 3 représente une courbe montrant l'évolution de la constante moteur (Km exprimé en Nm/W^{1/2}) en fonction du ratio diamètre d'aimant sur diamètre du moteur.
La figure 4 représente une vue en coupe axiale du moteur montrant les lignes de champ magnétique (90) générées par le rotor, ainsi que l'emplacement d'un élément de détection de position (80).

Le stator (1) est réalisé par empilement de plusieurs feuilles métalliques en un matériau magnétiquement doux. Le stator présente une couronne annulaire (10) à partir de laquelle s'étendent 9 jambes (11 à 19).

Chacune de ces jambes s'étend radialement en présentant une section rectangulaire constante. La surface frontale des jambes (11 à 19) est concave pour délimiter avec la surface extérieure du rotor (2) un entrefer.

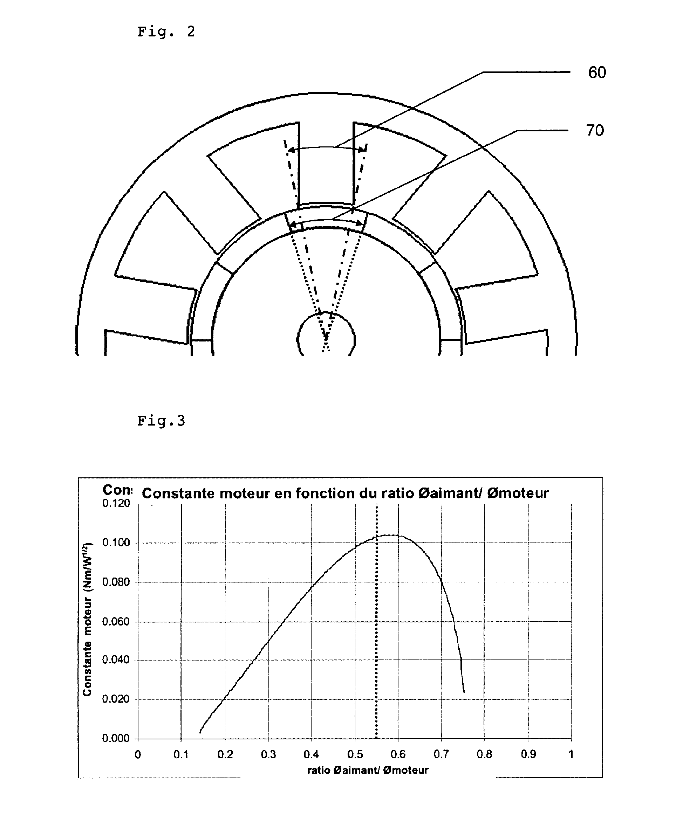

Dans le but d'obtenir un couple sinusoïdal et d'optimiser l'espace disponible pour les bobines, la largeur (60) de dent statorique doit être sensiblement égale à 60% du pas polaire (70) dans le cas d'un aimant 5 paires de pôles (fig. 2).

Une autre variante étant que cette largeur de dent corresponde à environ 50% du pas polaire d'un aimant 4 paires de pôles.

Le stator (1) peut présenter par ailleurs des trous pour le passage d'organe de fixation sur un support, par exemple de vis ou des rivets.

Chacune des jambes (11 à 19) reçoit une bobine électrique respectivement (42 à 50). Les bobines réparties entre trois séries de trois bobines. Chaque série correspond à une phase. Les séries de bobines sont alimentées avec des signaux électriques déphasés, par exemple un signal Usin(pt),un signal Usin(pt+ 120°) et un signal Usin(ρt + 240°). Dans une série de trois bobines placées sur des jambes consécutives, la bobine médiane est alimentée avec une polarité inverse de celles des deux bobines qui l'entourent.

Le rotor (2) est formé par une pièce cylindrique aimantée radialement pour présenter alternativement, à la surface extérieure, des pôles SUD et des pôles NORD. La partie aimantée peut être formée par l'association de 10 aimants minces en forme de tuiles collées (21 à 30) sur un noyau cylindrique ou encore par l'aimantation de secteurs tubulaires.

Une autre solution encore consiste à aimanter en surface une pièce cylindrique selon des festons de façon à ce que deux pôles opposés soient formés par des éléments de surface périphérique adjacents, reliés par une zone en arc de cercle pénétrant à l'intérieur de l'élément cylindrique.

La figure 3 représente une courbe de l'évolution de la constante moteur en fonction du rapport diamètre de l'aimant sur diamètre du moteur. La constante moteur décrit l'aptitude d'un moteur à convertir une puissance électrique en un couple. Pour une même puissance électrique, le moteur ayant la constante la plus grande fournira le plus grand couple. Aussi, pour la structure précédemment présentée, il est possible de définir un ratio diamètre d'aimant sur diamètre moteur de sorte que la constante moteur soit maximale. Au vue de la courbe, ce ratio doit être sensiblement égal à 0.55.

Au moteur triphasé, est associée une électronique de commande. A cette électronique, il peut être nécessaire de communiquer une information de position angulaire du rotor, relative au stator. La position angulaire du rotor peut être connue par différents procédés, à savoir :
- la mesure de la tension induite dans une bobine non alimentée, ce mode de pilotage est connu sous le nom de pilotage sans capteur dits « sensorless ».
- Un codeur pouvant être par exemple résistif, optique, magnétique ou inductif accouplé à la sortie du rotor. Ce mode de pilotage est connu sous le nom de pilotage avec codeur ou capteur.

Le pilotage avec codeur nécessite d'ajouter des composants complexes et coûteux au moteur. Une construction préférentielle permet de réaliser un codeur bon marché et intégré à la structure du moteur.

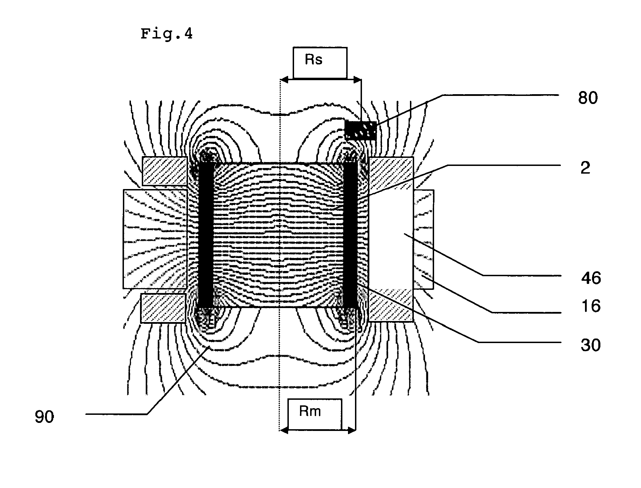

La figure 4 montre une solution préférée pour l'intégration du codeur qui se présente sous la forme d'au moins un élément sensible au champ magnétique (80) coopérant avec le rotor (2) du moteur. Cet élément sensible est une sonde à effet Hall qui est placée en extrémité du moteur de manière à détecter les variations d'induction axiale engendrées par la rotation du rotor (2).

A cet effet le rotor (2) présente une hauteur supérieure à celle du stator et est positionné avec un décalage axial du côté où est positionnée la sonde de Hall.

De manière à optimiser l'induction vue par la sonde à effet Hall, le positionnement radial de celle-ci est tel que le rayon (Rs) sur lequel se trouve l'élément sensible est égal ou légérement supérieur au rayon extérieur de l'aimant (Rm).

De manière préférentielle le codeur comporte trois sondes de Hall qui forment entre-elles un angle de 120° ou de 60° électriques.

Le montage ainsi constitué, permet d'utiliser le même aimant pour générer à la fois un couple moteur et une information de position grâce aux sondes de Hall ainsi positionnées.

## Revendications

1. Moteur triphasé formé par une partie statorique (1) excitée par des bobines électriques (42 à 50) et par un rotor (2) aimanté présentant N paires de pôles aimantés radialement en sens alternés, la partie statorique (1) présentant 9 dents (11 à 19) identiques s'étendant radialement depuis une couronne annulaire (10), deux dents consécutives étant écartées angulairement de 40°, **caractérisé en ce que** chaque dent présente dans le plan transversal une section trapézoïdale sensiblement constante et **en ce que** chaque phase comporte une série de trois bobines placées sur trois dents consécutives, la bobine centrale d'une série étant alimentée en sens opposé par rapport aux deux autres bobines de la même série et **en ce que** le rapport diamètre de l'aimant sur diamètre extérieur du moteur est sensiblement égal à 0.55.

2. Moteur triphasé selon la revendication 1, **caractérisé en ce que** chaque dent présente dans le plan transversal une section rectangulaire constante, le bord intérieur de ladite section rectangulaire étant concave avec un centre de courbure correspondant à l'axe de rotation du moteur.

3. Moteur triphasé selon la revendication 1 ou 2, **caractérisé en ce que** le rotor (2) présente 4 paires de pôles magnétiques et **en ce que** les dents statoriques ont une largeur angulaire (60) sensiblement égale à 50% du pas polaire (70).

4. Moteur triphasé selon la revendication 1 ou 2, **caractérisé en ce que** le rotor (2) présente 5 paires de pôles magnétiques et **en ce que** les dents statoriques ont une largeur angulaire (60) sensiblement égale à 60% du pas polaire (70).

5. Moteur triphasé selon la revendication 1 ou 2, les bobines étant bobinées séparément puis insérées dans le stator.

6. Moteur triphasé selon la revendication 1 ou 2, **caractérisé en ce qu'**il comporte trois séries de trois bobines.

7. Moteur triphasé selon la revendication 1 ou 2, **caractérisé en ce que** les séries de bobines électriques sont alimentées par des signaux déphasés de 120°.

8. Moteur triphasé selon l'une quelconque des revendications précédentes, **caractérisé en ce que** le stator est constitué par un empilement de tôles fines.

9. Moteur triphasé selon l'une quelconque des revendications précédentes, **caractérisé en ce que** l'extrémité frontale de l'épanouissement polaire est située dans le plan de la face frontale intérieure de la bobine.

10. Moteur triphasé selon l'une quelconque des revendications 1 à 9, **caractérisé en ce** le rotor (2) est formé par une bague aimantée en festons.

11. Moteur triphasé selon la revendication 1 ou 2, **caractérisé en ce que** le rotor (2) présente un multiple de 4 ou 5 paires de pôles aimantés radialement en sens alternés, et que le stator présente un nombre de dents multiple de 9.

12. Moteur triphasé selon l'une quelconque des revendications précédentes, **caractérisé en ce qu'**il comporte des éléments de détection de position (80) agissant avec l'extrémité du rotor et placés sur un diamètre sensiblement égal au diamètre extérieur du rotor.
